(19) **Europäisches Patentamt / European Patent Office / Office européen des brevets**

(11) **EP 3 678 836 B1**

(12) **FASCICULE DE BREVET EUROPEEN**

(45) Date de publication et mention
de la délivrance du brevet:
**27.10.2021 Bulletin 2021/43**

(21) Numéro de dépôt: **18773511.3**

(22) Date de dépôt: **13.07.2018**

(51) Int Cl.:
**B29C 49/12** (2006.01)    **B29C 49/48** (2006.01)
**B29C 49/06** (2006.01)    **B29L 31/00** (2006.01)

(86) Numéro de dépôt international:
**PCT/FR2018/051784**

(87) Numéro de publication internationale:
**WO 2019/048747 (14.03.2019 Gazette 2019/11)**

(54) **MOULE POUR RECIPIENT, COMPRENANT UN FOND DE MOULE MUNI D'UN PUITS CENTRAL, ET UNE TIGE D'ETIRAGE A EXTREMITE HEMISPHERIQUE, ET PROCÉDÉ DE FABRICATION ASSOCIÉ.**

FORM FÜR EINEN BEHÄLTER, BESTEHEND AUS EINEM FORMBODEN MIT EINER ZENTRALEN VERTIEFUNG UND EINER STRECKSTANGE MIT EINEM HALBKUGELFÖRMIGEN ENDE, UND ENTSPRECHENDER HERSTELLUNGSPROZESS.

MOULD FOR CONTAINER, COMPRISING A MOULD BASE PROVIDED WITH A CENTRAL WELL, AND A STRETCHING ROD WITH A HEMISPHERICAL END, AND RELATED MANUFACTURING PROCESS.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2017 FR 1758294**

(43) Date de publication de la demande:
**15.07.2020 Bulletin 2020/29**

(73) Titulaire: **Sidel Participations**
**76930 Octeville-sur-Mer (FR)**

(72) Inventeur: **DERRIEN, Mikaël**
**76930 Octeville-sur-mer (FR)**

(74) Mandataire: **Sidel Group**
**c/o Sidel Participations**
**Avenue de la Patrouille de France**
**76930 Octeville-sur-mer (FR)**

(56) Documents cités:
**FR-A1- 2 939 071    US-A1- 2012 037 645**
**US-A1- 2015 375 442    US-B1- 6 277 321**

Printed by Jouve, 75001 PARIS (FR)

## Description

L'invention a trait à la fabrication des récipients, notamment des bouteilles, par soufflage ou étirage soufflage à partir d'ébauches (préformes ou récipients intermédiaires non finis) dans une matière thermoplastique tel que le PET (polytéréphtalate d'éthylène).

Un récipient comprend d'ordinaire un corps, qui confère au récipient son volume, un col ouvert, qui s'étend en saillie à partir une extrémité supérieure du corps et par lequel on remplit le récipient (généralement au moyen d'un liquide ou d'une pâte), et un fond, qui ferme le corps à l'opposé du col et forme un socle par lequel le récipient doit pouvoir reposer de manière stable sur une surface plane telle qu'une table.

Un récipient est d'ordinaire formé par étirage soufflage dans un moule qui comprend un bloc de moule, dont une paroi interne définit une empreinte au moins partielle du corps du récipient, un fond de moule, dont une face supérieure de moulage définit une empreinte au moins partielle du récipient, et une tige d'étirage montée coulissante entre une position haute, dans laquelle la tige est écartée du fond de moule, et une position basse, dans laquelle une extrémité distale de la tige (par laquelle la tige exerce sur l'ébauche une poussée axiale qui contribue à son élongation) est voisine du fond de moule.

Pour certaines applications, qui nécessitent une capacité volumique importante (typiquement les lessives), les récipients sont pourvus de réserves en creux qui forment une poignée facilitant la prise en main. Ces réserves en creux sont ordinairement formées dans le moule au moyen de protubérances formées sur la paroi interne. En général, ces protubérances sont formées par des inserts mobiles qui viennent, dans une position déployée, faire saillie par rapport à la paroi interne de façon à repousser la matière du récipient pendant son formage.

La fabrication des récipients n'est pas sans difficultés.

Une première difficulté est la nécessité de procurer au fond du récipient une rigidité structurelle suffisante pour lui permettre de conserver sa forme (de façon à assurer sa stabilité) même sous la pression du contenu, et ce en dépit de la faible épaisseur de matière, d'autant que la masse des récipients est aujourd'hui tirée à la baisse en raison de sévères normes environnementales.

Pour procurer au fond cette rigidité structurelle, il est courant de lui donner une forme concave (c'est-à-dire que le fond fait saillie vers l'intérieur du récipient à partir du socle). Cette seule forme est généralement insuffisante, et il est également courant de prévoir en outre des raidisseurs, typiquement sous forme de nervures.

Une deuxième difficulté est d'assurer un formage correct du récipient. Il est important que la matière soit répartie de façon la plus homogène possible sur l'ensemble du corps et du fond, de manière à éviter l'apparition de zones de faiblesse qui nuiraient à la résistance mécanique ou à la stabilité du récipient.

Le problème qui se pose pendant le formage d'un récipient pourvu de poignées est que la matière subit des contraintes non homogènes en raison de la nécessité de former ces poignées. Plus précisément, les protubérances destinées à former une poignée exercent sur la matière des efforts qui provoquent, dans certaines zones du récipient en cours de formage, des tensions telles que la matière glisse localement par rapport à la paroi ou par rapport au fond de moule. Il en résulte un déséquilibre indésirable dans la répartition de la matière.

Certains constructeurs prévoient de donner à l'extrémité distale de la tige une forme complémentaire du fond de moule : il en va ainsi de la tige proposée par le brevet américain US 6 277 321 (Schmallbach). Cependant, même une telle forme ne résout pas nécessairement les problèmes de glissement de la matière. Il convient en effet de pincer fortement la matière à l'aide de la tige, mais au détriment de l'intégrité de la matière ; en outre, dans certaines configurations machine (typiquement une commande électrique ou électromagnétique de la tige), des efforts résistants trop importants appliqués à la tige sont susceptibles de placer la machine en défaut. Les documents US2015/375442A1 et US2012/037645A1 sont également illustratifs de l'environnement technologique de l'invention.

Le besoin persiste donc de proposer une solution permettant non seulement d'obtenir un récipient qui, pourvu de réserves en creux formant poignée, soit d'une rigidité suffisante, notamment sur son fond, mais en outre de garantir une répartition de la matière aussi homogène que possible en dépit des tensions subies par la matière lors de la conformation des poignées (notamment au moyen d'inserts) pendant le formage du récipient.

A cet effet, il est proposé, en premier lieu, un moule pour le formage par étirage soufflage d'un récipient à partir d'une ébauche en matière plastique, ce récipient comprenant un corps, qui s'étend selon un axe principal et est fermé par un fond définissant un socle annulaire qui s'étend dans un plan de pose sensiblement perpendiculaire à l'axe principal, le fond présentant, à partir du socle et en direction de l'axe principal, une voûte en creux vers l'intérieur du récipient, un bulbe central qui fait saillie à partir de la voûte vers l'intérieur du récipient, et un pion qui fait saillie au sommet du bulbe vers l'extérieur du récipient, ce moule comprenant :

- un bloc de moule dont une paroi interne définit une empreinte au moins partielle du corps du récipient, la paroi interne s'étendant selon un axe principal correspondant à l'axe principal du récipient ;
- un fond de moule ayant une face supérieure de moulage qui définit une empreinte au moins partielle du fond du récipient, le fond de moule présentant :

  ○ une face périphérique complémentaire de la voûte et qui s'étend en pente depuis un voisinage de l'axe principal jusqu'à un gorge annulaire complémentaire du socle,

∘ un dôme central complémentaire du bulbe et qui fait saillie de la face périphérique vers l'intérieur du moule, et

∘ un puits central complémentaire du pion, creusé dans le dôme et qui s'étend suivant un flanc tronconique depuis un bord sommital du dôme ayant un diamètre haut, jusqu'à un fond ayant un diamètre bas dont la valeur est inférieure à celle du diamètre haut ;

- une tige d'étirage qui se termine par une extrémité distale et est montée coulissante par rapport au bloc de moule entre une position haute dans laquelle l'extrémité distale est éloignée du fond de moule, et une position basse dans laquelle l'extrémité distale est voisine du fond de moule,

ce moule étant caractérisé en ce que, en position basse de la tige, son extrémité distale est séparée du flanc du puits d'une distance inférieure à une distance qui la sépare du fond du puits.

Il est proposé, en deuxième lieu, un procédé de fabrication d'un récipient dans un tel moule, à partir d'une ébauche en matière plastique, qui comprend les opérations consistant à :

- introduire dans le moule l'ébauche préalablement chauffée à une température supérieure à la température de transition vitreuse de son matériau constitutif ;
- injecter dans l'ébauche un fluide sous pression ;
- déplacer la tige d'étirage de sa position haute à sa position basse de façon à assurer un coincement par cisaillement de la matière entre l'extrémité distale de la tige et le flanc tronconique.

Il est proposé en troisième lieu, un récipient obtenu par ce procédé.

A la fin du formage, la matière se trouve localement maintenue entre l'extrémité distale de la tige et le flanc tronconique du puits central, sans toutefois être écrasée. Ce maintien évite que se produise un glissement général (et un désaxement) de la matière sous l'effet des tensions dissymétriques qui règnent dans celle-ci, notamment lorsqu'elle se déploie sur des protubérances faisant saillie de la paroi du bloc de moule. Cela garantit une meilleure homogénéité dans la répartition de la matière, au bénéfice de la rigidité structurelle et de l'équilibre du récipient.

Diverses caractéristiques supplémentaires peuvent être prévues, seules ou en combinaison. Ainsi, par exemple :

- Le flanc présente une ouverture angulaire, par rapport à l'axe principal, comprise entre 10° et 30° ; l'ouverture angulaire du flanc est de 20° environ ;
- La valeur du rapport entre le diamètre bas au fond du puits et le diamètre haut au bord sommital du puits (et donc le rapport entre la valeur du rayon bas du fond du puits et celle du le rayon haut de son bord sommital) est comprise entre 65% et 80% ;

- En position basse de la tige d'étirage, l'extrémité distale de celle-ci est distante du flanc du puits d'environ 2,5 mm ;
- La paroi du bloc de moule est asymétrique de révolution autour de l'axe principal.
- Le moule comprend au moins un insert mobile transversalement par rapport au bloc de moule, entre une position rétractée dans laquelle l'insert est en retrait de la paroi, et une position déployée dans laquelle l'insert fait saillie de la paroi pour former une réserve en creux dans le corps du récipient ;
- L'extrémité distale de la tige d'étirage est hémisphérique et présente un rayon dont la valeur est inférieure à celle du rayon haut du puits central ;
- En variante, l'extrémité distale de la tige est plate ; dans ce cas, la valeur du diamètre de l'extrémité distale de la tige est avantageusement inférieure à celle du diamètre bas ; en outre, la tige peut, au voisinage de son extrémité, présenter une certaine conicité, dont la valeur est de préférence inférieure à l'ouverture angulaire du flanc du puits ;

D'autres objets et avantages de l'invention apparaîtront à la lumière de la description d'un mode de réalisation, faite ci-après en référence aux dessins annexés dans lesquels :

- La **FIG.1** est une vue en perspective, par-dessous, d'un récipient selon l'invention ;
- La **FIG.2** est une vue coupe du fond du récipient de la **FIG.1,** selon le plan de coupe II-II ;
- La **FIG.3** est une vue en coupe d'un moule pour le formage par étirage-soufflage du récipient de la **FIG.1** ;
- La **FIG.4** est une vue en coupe locale du moule de la **FIG.3,** selon le plan de coupe IV-IV ;
- La **FIG.5** est une vue de détail, à plus grande échelle, du fond du moule de la **FIG.3,** prise dans le médaillon V ;
- La **FIG.6A** est une vue similaire à la **FIG.5,** illustrant la fin du formage du récipient, avec une tige dont l'extrémité est hémisphérique ;
- La **FIG.6B** est une vue similaire à la **FIG.6A,** illustrant une variante dans laquelle la tige présente une extrémité conique ;
- La **FIG.7A** est une vue de détail en coupe, à plus grande échelle, du fond du récipient de la **FIG.3,** prise dans le médaillon VII, formé avec une tige telle qu'illustrée sur la **FIG.6A** ;
- La **FIG.7B** est une vue similaire à la **FIG.7A,** montrant le fond du récipient formé avec une tige telle qu'illustrée sur la **FIG.6B.**

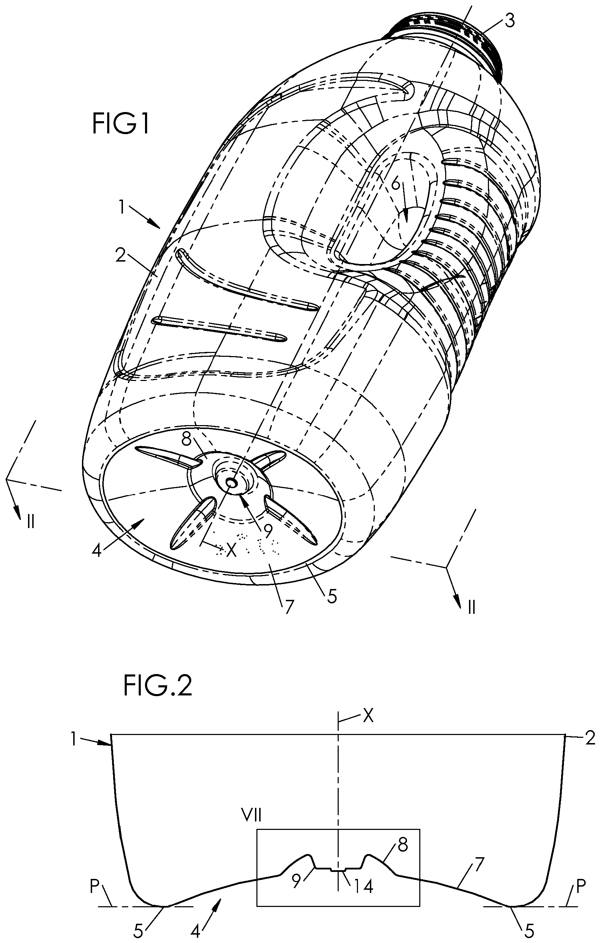

Sur la **FIG.1** est représenté un récipient **1.** Il s'agit en l'espèce d'une bouteille, destinée à accueillir un contenu tel qu'une lessive liquide. Le récipient **1** illustré est de grande capacité, c'est-à-dire supérieure à deux litres (et par ex. de quatre litres).

Le récipient **1** est de préférence réalisé dans une matière plastique, par ex. en PET.

Le récipient **1** comprend un corps **2,** qui s'étend selon un axe **X** principal. A une extrémité supérieure du corps **2,** celui-ci se prolonge par un col **3** ouvert par lequel le récipient **1** est rempli lors de son conditionnement (puis, ensuite, vidé lors de son utilisation). A une extrémité inférieure du corps **2,** le récipient **1** se termine par un fond **4** qui ferme le corps **2** et définit un socle **5** annulaire qui s'étend dans un plan **P** de pose sensiblement perpendiculaire à l'axe **X** principal.

Selon un mode de réalisation, l'axe **X** principal est confondu avec un axe central du col **3**. Plus précisément, l'axe **X** principal est, dans l'exemple illustré, l'axe joignant le centre géométrique du col **3** et le centre géométrique du fond **4**. En variante, le col **3** pourrait être désaxé par rapport au corps **2**.

Comme on le voit sur la **FIG.1,** le corps **2** du récipient **1** est pourvu d'une réserve **6** en creux qui forme une poignée destinée à faciliter la prise en main du récipient **1** (ce qui est nécessaire compte tenu de son volume et de son poids importants).

Dans l'exemple illustré, le récipient **1** présente un plan général de symétrie (confondu avec le plan de coupe II-II) et comprend deux réserves **6** en creux dos à dos, qui forment conjointement la poignée et sont destinées respectivement à accueillir le pouce et les autres doigts de la main qui saisit le récipient **1**.

Le fond **4** présente, à partir du socle **5** et en direction, radialement, de l'axe **X** principal :

- Une voute **7** en creux vers l'intérieur du récipient **1** ;
- Un bulbe **8** central qui fait saillie à partir de la voûte **7** vers l'intérieur du récipient **1** ;
- Un pion **9** qui fait saillie au sommet du bulbe **8** vers l'extérieur du récipient **1**.

Comme on le voit sur la **FIG.1,** le récipient **1** est asymétrique de révolution autour de son axe **X** principal.

Ainsi, dans l'exemple illustré, le socle **5** présente une forme ovale (qui correspond au contour général en section du corps **2** du récipient **1,** tel qu'évalué dans un plan transversal perpendiculaire à l'axe **X** principal). Cependant cette forme n'est qu'illustrative, et le socle **5** (comme le corps **2** en section) pourrait être de forme rectangulaire, ou carrée).

Par ailleurs, le corps **2** du récipient **1** pourrait, en variante (et en faisant abstraction des réserves **6** en creux) être globalement symétrique de révolution, le socle **5** étant dans ce cas de forme circulaire.

Le récipient **1** est formé dans un moule **10** par étirage soufflage à partir d'une ébauche **11.** Dans l'exemple illustré, l'ébauche **11** est une préforme, terme que, par souci de simplification, on emploie dans ce qui suit.

La préforme **11** comprend un corps **12** de forme générale cylindrique, un col **3** qui s'ouvre à une extrémité supérieure de la préforme **11** (lorsqu'elle est en position dans le moule **10**), et un fond **13** hémisphérique qui ferme le corps **12** à une extrémité inférieure. Le col **3** présente une forme qui demeure inchangée pendant le formage du récipient **1**.

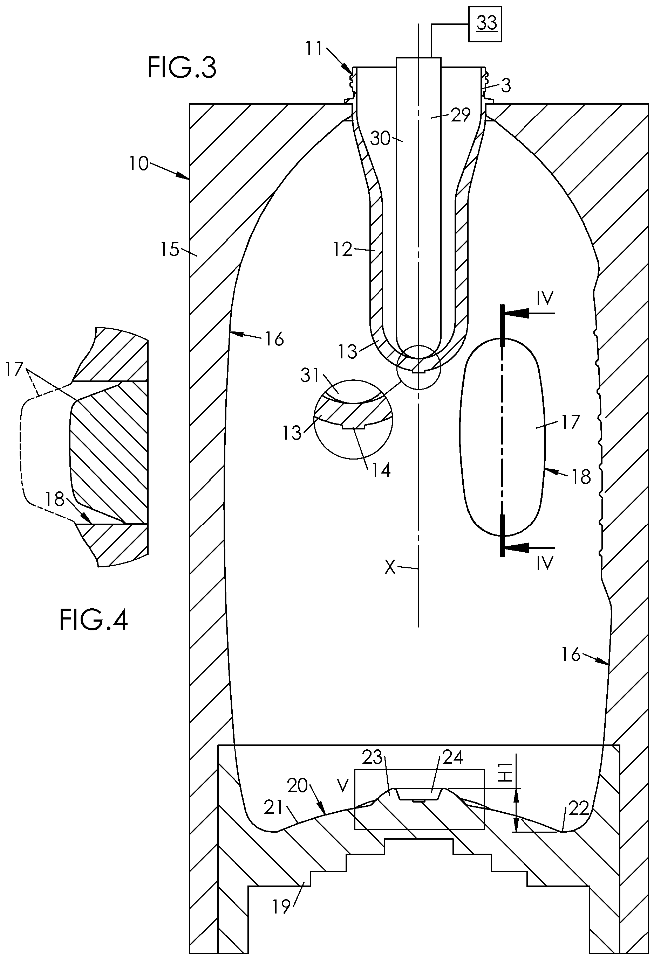

La préforme **11** est obtenue par injection dans un moule à son empreinte. Dans l'exemple illustré dans le médaillon de détail au centre de la **FIG.3,** la préforme **11** est pourvue d'une carotte **14** d'injection qui fait saillie de son fond **13**.

Cette carotte **14,** qui peut présenter une épaisseur variable, correspond à un résidu de matière en provenance d'un canal d'injection alimentant le moule de la préforme **11**. La carotte **14** n'est pas ébavurée : dans certaines machines, elle peut être mise à profit lors du formage du récipient **1** pour contribuer à le maintenir dans son axe pendant le formage et ainsi minimiser le risque de glissement de la matière. Dans les exemples illustrés sur les **FIG.2, FIG.6A, FIG.6B, FIG.7A** et **FIG.7B,** la carotte **14** demeure sur le fond **4** du récipient **1**.

Le moule **10,** illustré en coupe sur la **FIG.3,** comprend, en premier lieu, un bloc **15** de moule. Ce bloc **15** de moule peut être subdivisé en deux parties symétriques (appelées demi-moules) articulées autour d'une charnière entre une position ouverte (non représentée) dans laquelle les demi-moules sont écartés l'un de l'autre pour permettre l'évacuation d'un récipient **1** formé et l'introduction d'une nouvelle préforme **11,** et une position fermée dans laquelle les demi-moules sont plaqués l'un contre l'autre pour former ensemble un volume fermé dans lequel est formé le récipient **1**.

Le bloc **15** de moule présente une paroi **16** interne qui définit une empreinte au moins partielle du corps **2** du récipient **1**. La paroi **16** interne s'étend selon un axe **X** principal qui correspond à l'axe **X** principal du récipient **1** (raison pour laquelle leurs références sont identiques).

Dans ce qui suit, l'expression « axe principal » se réfère indifféremment à l'axe **X** principal du récipient **1** ou à celui défini par le bloc **15** de moule. Lorsque, comme dans l'exemple illustré, le récipient **1** est asymétrique de révolution autour de l'axe **X** principal, il en va bien entendu de même de la paroi **16**.

Selon un mode particulier de réalisation, illustré notamment sur les **FIG.3** et **FIG.4,** le moule **10** comprend, en deuxième lieu, au moins un insert **17** mobile transversalement par rapport au bloc **15** de moule entre :

- une position rétractée (en trait plein sur la **FIG.4**) dans laquelle l'insert **17** est en retrait de la paroi **16,** et
- une position déployée (en pointillés sur la **FIG.4**) dans laquelle l'insert **17** fait saillie de la paroi **16** pour former une réserve **6** en creux dans le corps **2** du récipient **1**.

Selon un mode de réalisation, le moule **10** comprend deux inserts **17** symétriques en regard (un dans chaque demi-moule) destinés à former chacun une réserve **6** en creux.

L'insert **17** (ou chaque insert **17**) est monté coulissant dans une échancrure **18** complémentaire pratiquée dans le bloc **15** de moule. Le déplacement de l'insert **17** de sa position rétractée à sa position déployée (et réciproquement) peut être réalisé au moyen d'un vérin pneumatique, hydraulique ou encore électrique.

Cet (ces) insert(s) **17** permet(tent) de réaliser une (des) réserve(s) **6** en creux profonde(s). Cependant, il est possible de réaliser une (des) réserve(s) en creux moins profonde(s) au moyen d'une protubérance formée directement sur la paroi **16**.

Le moule **10** comprend, en troisième lieu, un fond **19** de moule. Le fond **19** de moule complète, avec le bloc **15** de moule, l'empreinte du récipient **1** (hors col **3**).

A cet effet, le fond **19** de moule présente une face **20** supérieure de moulage qui définit une empreinte au moins partielle du fond **4** du récipient **1**.

Plus précisément, le fond **19** de moule présente, premièrement, une face **21** périphérique complémentaire de la voûte **7** et qui s'étend en pente depuis un voisinage de l'axe **X** principal jusqu'à un gorge **22** annulaire complémentaire du socle **5**.

Le fond **19** de moule présente, deuxièmement, un dôme **23** central complémentaire du bulbe **8** et qui fait saillie de la face **21** périphérique vers l'intérieur du moule **10**.

Le fond **19** de moule présente, troisièmement, un puits **24** central, creusé dans le dôme **23** vers l'extérieur du moule **10,** et dans lequel est destiné à être formé le pion **9**. Le puits **24** central s'étend suivant un flanc **25** tronconique, depuis un bord **26** sommital du dôme **23**, jusqu'à un fond **27**.

Lorsque, comme dans l'exemple illustré, le récipient **1** (et donc son fond **4**) est asymétrique de révolution autour de son axe **X** principal, il en va bien entendu de même du fond **19** de moule.

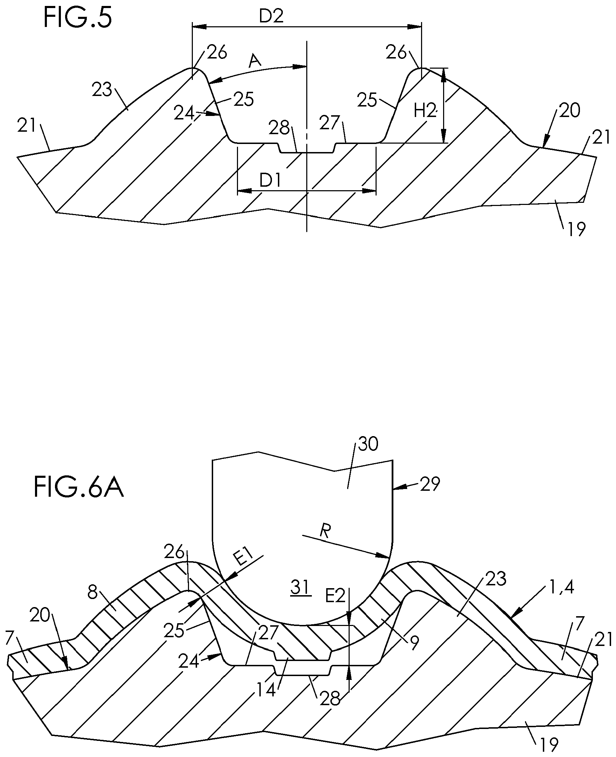

On note (voir **FIG.3** et **FIG.5**) :

**D1** le diamètre du fond **27** du puits **24** (« diamètre bas ») ; le rayon correspondant (« rayon bas ») a donc une valeur **D1/2** ;
**D2** le diamètre du bord **26** sommital du dôme **23** (« diamètre haut ») ; le rayon correspondant (« rayon haut ») a donc une valeur **D2/2** ;
**A** l'ouverture angulaire du flanc **25,** qui correspond au demi-angle au sommet du cône sur lequel s'appuie le flanc **25** ;
**H1** la hauteur hors tout de la face **20** supérieure de moulage, mesurée entre le fond de la gorge **22** annulaire et le bord **26** sommital du dôme **23** ;
**H2** la profondeur du puits **24** central, mesurée entre le fond **27** du puits et le bord **26** sommital du dôme **23**.
**D1** et **D2** sont tels que :

$$D1 < D2$$

**D1** et **D2** sont avantageusement dans un rapport tel que :

$$65\% \leq \frac{\mathbf{D1}}{\mathbf{D2}} \leq 80\%$$

Et, selon un mode préféré de réalisation illustré sur la **FIG.5** :

$$\frac{\mathbf{D1}}{\mathbf{D2}} \approx 68\%$$

L'ouverture **A** angulaire du flanc est de préférence telle que :

$$10° < \mathbf{A} < 30°$$

Et, selon un mode préféré de réalisation illustré sur la **FIG.5** :

$$\mathbf{A} \approx 20°$$

**H1** et **H2** sont avantageusement dans un rapport tel que :

$$\frac{1}{5} \leq \frac{\mathbf{H2}}{\mathbf{H1}} \leq \frac{2}{5}$$

Selon un mode de réalisation illustré notamment sur la **FIG.5,** le fond **27** du puits **24** est creusé en son centre d'un trou **28** dimensionné pour accueillir en partie la carotte **14** d'injection formée en saillie sur la préforme **11**.

Le moule **10** comprend, en quatrième lieu, une tige **29** d'étirage.

La tige **29** présente un corps **30** cylindrique ou tubulaire, qui s'étend parallèlement à l'axe **X** principal (et, dans l'exemple illustré, le long de l'axe **X** principal). La tige **29** se termine par une extrémité **31** distale.

La tige **29** est montée coulissante par rapport au bloc **15** de moule entre :

- une position haute dans laquelle l'extrémité **31** distale est éloignée du fond **19** de moule (**FIG.3**), et
- une position basse (**FIG.6A**) dans laquelle l'extrémité **31** distale est voisine du fond **19** de moule.

Selon un premier mode de réalisation illustré sur la **FIG.6A,** l'extrémité **31** distale de la tige **29** d'étirage est hémisphérique ; la sphère sur laquelle s'appuie l'extrémité distale présente un rayon, noté **R**. Ce rayon **R** de l'extrémité **31** de la tige **29** est tel que sa valeur est inférieure à celle du rayon haut (soit à la moitié de la valeur du diamètre haut) :

$$R < D2/2$$

Selon un mode préféré de réalisation, la valeur du rayon **R** de l'extrémité **31** de la tige **29** est en outre inférieure ou égale (ou sensiblement égale) à celle du rayon bas, soit à la moitié de la valeur du diamètre bas :

$$R \leq D1/2$$

ou :

$$R \approx D1/2$$

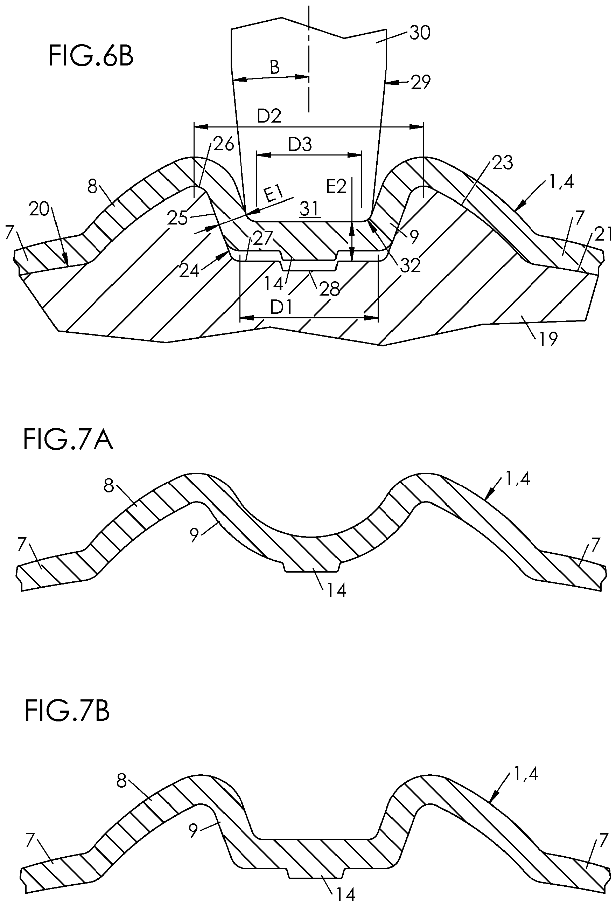

Comme on le voit sur la **FIG.6A,** dans ce premier mode de réalisation, le pion **9** n'épouse pas parfaitement le puits **24** mais épouse en revanche l'extrémité **31** hémisphérique de la tige **29**. Dans ce cas, comme illustré sur la **FIG.7A,** le pion **9** est de forme sensiblement sphérique.

Selon un deuxième mode de réalisation illustré sur la **FIG.6B,** l'extrémité **31** distale de la tige **29** d'étirage est plate. La valeur du diamètre, noté **D3,** de l'extrémité **31** de la tige **29** est alors, de préférence, inférieure ou égale à celle du diamètre D1 bas du puits **24** :

$$D3 \leq D1.$$

Cela permet à la tige **29** de venir s'insérer partiellement dans le puits **24**. Dans ce cas, pour limiter le risque de perforation de la matière de la préforme **11** pendant le formage, l'extrémité **31** est avantageusement pourvue, sur sa périphérie, d'un congé **32**.

Par ailleurs, dans ce deuxième mode de réalisation, la tige **29** peut présenter, au voisinage de son extrémité **31**, une conicité **B** (définie ici comme le demi-angle au sommet du cône sur lequel s'appuie l'extrémité **31**). Cette conicité **B** est avantageusement inférieure ou égale à l'ouverture angulaire **A** du puits :

$$B \leq A.$$

Comme on le voit sur la **FIG.6B,** dans ce deuxième mode de réalisation, le pion **9** n'épouse pas complètement le puits **24** car la matière n'atteint pas le fond **27**. Cependant, compte tenu de la proximité des formes du puits **24** et de l'extrémité **31** de la tige **29,** le profil du pion **9** est, comme celui du puits **24,** conique (**FIG.7B**).

Quelle que soit la forme retenue pour la tige **29,** en position basse de celle-ci, son extrémité **31** distale est séparée du flanc **25** du puits **24** d'une distance **E1** inférieure à celle, notée **E2,** qui la sépare du fond **27** du puits **24** :

$$E1 < E2.$$

Un réglage fin de l'une et/ou l'autre des distances **E1, E2** peut être obtenu grâce à un dispositif **33** électrique ou électromagnétique de commande de la position de la tige **29**. Un tel dispositif **33** permet en effet de connaître à chaque instant la position verticale de l'extrémité **31** de la tige **29** et, par conséquent, son positionnement exact par rapport au fond **19** de moule.

Pour fabriquer le récipient **1,** on procède comme suit.

Une première opération consiste à introduire dans le moule **10** la préforme **11** préalablement chauffée à une température supérieure à sa température de transition vitreuse. Dans le cas du PET, dont la température de transition vitreuse est de 80°C environ, la préforme **11** est par ex. chauffée à une température supérieure ou égale à 100°C environ.

Une deuxième opération (dite de soufflage) consiste à injecter dans la préforme **11** un fluide (notamment un gaz, typiquement de l'air) sous pression.

En pratique, cette opération est subdivisée en deux étapes : une étape de présoufflage dans laquelle la pression d'injection (dénommée pression de présoufflage) est modérée (inférieure à 15 bars), et une étape de soufflage proprement dite, dans laquelle la pression d'injection (dénommée pression de soufflage) est élevée (supérieure ou égale à 25 bars).

Une opération complémentaire au soufflage (dite d'étirage) consiste, pendant l'injection, à déplacer la tige **29** d'étirage de sa position haute à sa position basse, de façon (grâce aux dimensions introduites ci-dessus) à pincer la matière entre l'extrémité **31** distale de la tige **29** et le flanc **25** tronconique (**FIG.6A, FIG.6B**). En pratique, l'étirage a lieu pendant le présoufflage. Celui-ci est interrompu (et le soufflage commandé) dès lors que la tige **29** d'étirage a atteint sa position basse.

Dans l'exemple illustré, où le moule **10** est pourvu d'inserts **17** mobiles, une dernière opération, dite de boxage, consiste, pendant le présoufflage, à déplacer chaque insert **17** de sa position rétractée à sa position déployée. La matière vient s'appliquer contre chaque insert **17,** sans toutefois l'épouser intimement, car la pression régnant dans l'ébauche du récipient en formation est insuffisante.

A la fin du présoufflage, la matière se trouve localement maintenue entre l'extrémité **31** distale de la tige **29** et le flanc **25** tronconique du puits **24** central (que la tige soit hémisphérique, **FIG.6A** ou conique, **FIG.6B**), sans être écrasée contre le fond **27** du puits **24**.

Comme illustré sur les **FIG.6A** et **FIG.6B,** l'extrémité **31** distale de la tige **29** est effectivement suffisamment écartée du fond **27** du puits **24** pour que la matière ne soit pas pincée entre cette extrémité **31** distale et le fond **27** du puits **24**. Cela préserve l'intégrité de la matière en évitant que celle-ci ne soit poinçonnée par la tige **29.** Cela permet en outre de maintenir en fonctionnement normal le dispositif **33** électrique (ou électromagnétique) de commande de la tige **29,** puisque les efforts résistants axiaux exercés à son encontre par le fond **19** de moule sont minimisés.

Cependant, le pincement de la matière entre l'extrémité **31** distale hémisphérique et le flanc **25** suffit à procurer un excellent maintien de la matière pendant le soufflage, lorsque, sous la pression élevée, les réserves **6** en creux sont conformées par déploiement de la matière sur les inserts **17**. La matière est alors pincée - et serrée - entre la tige **29** et le fond **19** de moule, sans toutefois être écrasée.

On peut observer sur les **FIG.6A** et **FIG.6B** que la surface de matière effectivement pincée entre la tige **29** et le fond **19** de moule est très faible au regard des surfaces avoisinantes (surface de l'extrémité **31** de la tige **29** ; surface du puits **24**). Compte tenu des choix dimensionnels précisés ci-dessus (notamment **D1, D2, D3, R** et leurs conséquences sur **E1** et **E2**), et de l'approche tangentielle de la tige **29** par rapport au flanc **25** du puits **24,** la contrainte à laquelle est soumise la matière pincée entre l'extrémité **31** de la tige **29** et le flanc **25** est, pour l'essentiel, une contrainte de cisaillement. Ce cisaillement provoque une bonne adhérence locale de la matière aux surfaces respectives de la tige **29** et du puits **24.**

Ce cisaillement est permis par le fait que la distance **E1** qui sépare l'extrémité **31** distale de la tige **29** du flanc **25** du puits **24** est inférieure à celle, notée **E2,** qui la sépare du fond **27** du puits **24,** ce qui procure à la tige **29** une certaine course axiale après que la matière a été prise en sandwich entre son extrémité **31** et le flanc **25** du puits **24.** Une telle course et, par voie de conséquence, le cisaillement précité n'existeraient pas si la tige **29** venait en même temps buter contre le fond **27** du puits **24,** c'est-à-dire si les distances **E1** et **E2** étaient égales ou pratiquement égales (soit $E1 \approx E2$).

La matière ainsi coincée voit son glissement minimisé sous l'effet des tensions provoquées par le déploiement de la matière sur les inserts **17**. Il en résulte une bonne homogénéité dans la répartition de la matière.

Un tel coincement est obtenu efficacement bien que les efforts axiaux résistants opposés par le fond **19** de moule (à travers la matière du récipient **1**) soient limités.

En effet, la résultante des efforts résistants opposés par le fond **19** de moule sont normaux à la surface où est réalisé le coincement, c'est-à-dire normaux à la surface du flanc **25.**

Cette résultante comprend une faible composante axiale (proportionnelle au Sinus de l'angle **A**), et une composante radiale comparativement plus forte (proportionnelle au Cosinus de l'angle **A**).

L'épaisseur du fond **13** de la préforme **11** peut varier (elle est par exemple comprise entre 3 mm et 4 mm). Lors du formage, cependant, cette épaisseur diminue. Au centre du fond **4** du récipient **1,** à la fin du formage, l'épaisseur de matière peut demeurer supérieure ou égale à 2,5 mm en raison du faible taux d'étirage qu'elle subit.

Dans ce cas, il est préférable, pour assurer le coincement de la matière tout en évitant son écrasement, de placer, en position basse de la tige **29** d'étirage, l'extrémité **31** distale de celle-ci de manière que sa distance **E1** au flanc **25** du puits **24** corresponde à l'épaisseur de la matière, soit :

$$E1 \approx 2,5 \ mm$$

En revanche, la distance **E2** de l'extrémité 31 distale de la tige **29** au fond **27** du puits **24** est avantageusement supérieure ou égale à 3 mm :

$$E2 \geq 3 \ mm$$

Avec même, de préférence :

$$E2 \approx 4 \ mm$$

Ces réglages peuvent être réalisés grâce aux choix judicieux, présentés ci-dessus, des paramètres **A, D1, D2, R** (ou, respectivement, **D3**) et **H2.**

On voit sur les **FIG.6A** et **FIG.6B** que la matière n'atteint pas, en pratique, le fond **27** du puits **24** (selon son épaisseur, la carotte **14** peut cependant venir en partie se loger dans le trou **28**).

On notera que la géométrie du dôme **23** peut également contribuer au coincement de la matière. Plus précisément, selon un mode de réalisation illustré sur les **FIG.6A** et **FIG.6B,** le bord **26** sommital est arrondi sous forme d'un congé de raccordement entre le flanc **25** et la partie externe du dôme **23**. Le rayon de ce congé de raccordement est assez faible (notamment de l'ordre de 1 mm à 2 mm), et la pente de la partie externe du dôme est assez marquée.

De la sorte, la matière qui s'enroule intimement sur le bord **26** sommital sous la pression élevée régnant dans le récipient **1** lors du soufflage présente localement un rayon de courbure assez faible (et donc une cambrure marquée), qui contribue à verrouiller radialement le pion **9** soumis aux contraintes asymétriques qui s'exercent dans la matière.

**Revendications**

1. Moule (**10**) pour le formage par étirage soufflage d'un récipient (**1**) à partir d'une ébauche (**11**) en matière plastique, ce récipient (**1**) comprenant un corps (**2**), qui s'étend selon un axe (**X**) principal et est fermé par un fond (**4**) définissant un socle (**5**) annulaire qui s'étend dans un plan (**P**) de pose sensiblement perpendiculaire à l'axe (**X**) principal, le fond (**4**) présentant, à partir du socle (**5**) et en direction de l'axe (**X**) principal, une voûte (**7**) en creux vers l'intérieur du récipient (**1**), un bulbe (**8**) central qui fait saillie à partir de la voûte (**7**) vers l'intérieur du récipient (**1**), et un pion (**9**) qui fait saillie au sommet du bulbe (**8**) vers l'extérieur du récipient (**1**), ce moule (**10**) comprenant :

- un bloc (**15**) de moule dont une paroi (**16**) interne définit une empreinte au moins partielle du corps (**2**) du récipient (**1**), la paroi (**16**) interne s'étendant selon un axe (**X**) principal correspondant à l'axe (**X**) principal du récipient (**1**) ;
- un fond (**19**) de moule ayant une face (**20**) supérieure de moulage qui définit une empreinte au moins partielle du fond (**4**) du récipient (**1**), le fond (**19**) de moule présentant :

  ◦ une face (**21**) périphérique complémentaire de la voûte (**7**) et qui s'étend en pente depuis un voisinage de l'axe (**X**) principal jusqu'à une gorge (**22**) annulaire complémentaire du socle (**5**),
  ◦ un dôme (**23**) central complémentaire du bulbe (**8**) et qui fait saillie de la face (**21**) périphérique vers l'intérieur du moule (**10**), et
  ◦ un puits (**24**) central complémentaire du pion (**9**), creusé dans le dôme (**23**) et qui s'étend suivant un flanc (**25**) tronconique depuis un bord (**26**) sommital du dôme (**23**) ayant un diamètre (**D2**) haut, soit un rayon haut de valeur **D2/2,** jusqu'à un fond (**27**) ayant un diamètre (**D1**) bas, soit un rayon bas de valeur **D1/2,** et la valeur du diamètre (**D1**) bas est inférieure à celle du diamètre (**D2**) haut ;

- une tige (**29**) d'étirage qui se termine par une extrémité (**31**) distale et est montée coulissante par rapport au bloc (**15**) de moule entre une position haute dans laquelle l'extrémité (**31**) distale est éloignée du fond (**19**) de moule, et une position basse dans laquelle l'extrémité (**31**) distale est voisine du fond (**19**) de moule ;

ce moule (**10**) étant **caractérisé en ce que**, en position basse de la tige (**29**), son extrémité (**31**) distale est séparée du flanc (**25**) du puits (**24**) central d'une distance (**E1**) inférieure à une distance (**E2**) qui la sépare du fond (**27**) du puits.

2. Moule (**10**) selon la revendication 1, **caractérisé en ce que** le flanc (**25**) présente une ouverture (**A**) angulaire, par rapport à l'axe (**X**) principal, comprise entre 10° et 30°.

3. Moule (**10**) selon la revendication 2, **caractérisé en ce que** l'ouverture angulaire du flanc (**25**) est de 20° environ.

4. Moule (**10**) selon l'une des revendications précédentes, **caractérisé en ce que** la valeur du rapport **D1/D2** entre le diamètre (**D1**) bas du fond (**27**) du puits et le diamètre (**D2**) haut du bord (**26**) sommital du puits (**24**) est comprise entre 65% et 80%.

5. Moule (**10**) selon l'une des revendications précédentes, **caractérisé en ce que**, en position basse de la tige (**29**) d'étirage, l'extrémité (**31**) distale de celle-ci est à une distance (**E1**) du flanc (**25**) du puits (**24**) central d'environ 2,5 mm.

6. Moule (**10**) selon l'une des revendications précédentes, **caractérisé en ce que** la paroi (**16**) du bloc (**15**) de moule est asymétrique de révolution autour de l'axe (**X**) principal.

7. Moule (**10**) selon l'une des revendications précédentes, **caractérisé en ce qu'**il comprend au moins un insert (**17**) mobile transversalement par rapport au bloc (**15**) de moule, entre une position rétractée dans laquelle l'insert (**17**) est en retrait de la paroi (**16**), et une position déployée dans laquelle l'insert (**17**) fait saillie de la paroi (**16**) pour former une réserve (**6**) en creux dans le corps (**2**) du récipient (**1**).

8. Moule (**10**) selon l'une des revendications précédentes, **caractérisé en ce que** l'extrémité (**31**) distale de la tige (**29**) d'étirage est hémisphérique et présente un rayon (**R**) dont la valeur est inférieure à celle (**D2/2**) du rayon haut du puits (**24**) central.

9. Moule (**10**) selon l'une des revendications 1 à 8, **caractérisé en ce que** l'extrémité (**31**) distale de la tige (**29**) d'étirage est plate et présente un diamètre (**D3**) de valeur inférieure à celle du diamètre (**D1**) bas.

10. Moule (**10**) selon la revendication 9, **caractérisé en ce que** la tige (**29**) présente, au voisinage de son extrémité (**31**), une conicité (**B**).

11. Moule selon la revendication 2 et la revendication 10, prises en combinaison, **caractérisé en ce que** la conicité (**B**) de la tige (**29**) est inférieure à l'ouverture (**A**) angulaire du flanc (**25**).

12. Procédé de fabrication d'un récipient (**1**) dans un moule (**10**) selon l'une des revendications précédentes, à partir d'une ébauche (**11**) en matière plastique, qui comprend les opérations consistant à :

  - introduire dans le moule (**10**) l'ébauche (**11**) préalablement chauffée à une température supérieure à la température de transition vitreuse de son matériau constitutif ;
- injecter dans l'ébauche (**11**) un fluide sous pression ;
- déplacer la tige (**29**) d'étirage de sa position haute à sa position basse de façon à assurer un coincement par cisaillement de la matière entre l'extrémité (**31**) distale de la tige (**29**) et le flanc (**24**) tronconique.

**Patentansprüche**

1. Formwerkzeug (10) zum Formen durch Streckblasen eines Behälters (1) aus einem Vorformling (11) aus Kunststoff, wobei dieser Behälter (1) einen Körper (2) umfasst, der sich entlang einer Hauptachse (X) erstreckt und durch einen Boden (4) verschlossen wird, der einen ringförmigen Sockel (5) definiert, der sich in einer im Wesentlichen senkrecht zur Hauptachse (X) verlaufenden Abstellebene (P) erstreckt, wobei der Boden (4) ausgehend vom Sockel (5) und in Richtung der Hauptachse (X) eine nach innerhalb des Behälters (1) vertiefte Wölbung (7), eine ausgehend von der Wölbung (7) nach innerhalb des Behälters (1) vorspringende Kuppel (8) und einen am Scheitel der Kuppel (8) nach außerhalb des Behälters (1) vorspringenden Zapfen (9) aufweist, wobei dieses Formwerkzeug (10) umfasst:

   - einen Formwerkzeugblock (15), von dem eine Innenwand (16) einen zumindest partiellen Hohlraum des Körpers (2) des Behälters (1) definiert, wobei sich die Innenwand (16) entlang einer Hauptachse (X) erstreckt, die der Hauptachse (X) des Behälters (1) entspricht;
   - einen Formwerkzeugboden (19), der eine Formungsoberseite (20) hat, die einen zumindest partiellen Hohlraum des Bodens (4) des Behälters (1) definiert, wobei der Formwerkzeugboden (19) aufweist:

      o eine Randfläche (21), die komplementär zur Wölbung (7) ist und die sich geneigt von einer Umgebung der Hauptachse (X) bis zu einer ringförmigen Nut (22), die komplementär zum Sockel (5) ist, erstreckt,
      o eine zentrale Kuppe (23), die komplementär zur Kuppel (8) ist und die von der Randfläche (21) zum Innenraum des Formwerkzeugs (10) hin vorspringt, und
      o eine zentrale Vertiefung (24), die komplementär zum Zapfen (9) ist, in der Kuppe (23) ausgebildet ist und sich entlang eine Kegelstumpfflanke (25) von einem Scheitelrand (26) der Kuppe (23) mit einem oberen Durchmesser (D2), das heißt einem oberen Radius mit dem Wert D2/2, aus bis zu einem Boden (27) mit einem unteren Durchmesser (D1), das heißt einem unteren Radius mit dem Wert D1/2, erstreckt, wobei der Wert des unteren Durchmessers (D1) kleiner als der des oberen Durchmessers (D2) ist;

      - eine Reckstange (29), die mit einem distalen Ende (31) endet und in Bezug auf den Formwerkzeugblock (15) zwischen einer oberen Position, in der das distale Ende (31) vom Formwerkzeugboden (19) entfernt ist, und einer unteren Position, in der das distale Ende (31) dem Formwerkzeugboden (19) nahe ist, verschieblich gelagert ist;

   wobei dieses Formwerkzeug (10) **dadurch gekennzeichnet ist, dass** in der unteren Position der Stange (29) deren distales Ende (31) von der Flanke (25) der zentralen Vertiefung (24) um einen Abstand (E1) getrennt ist, der geringer als ein Abstand (E2) ist, der sie vom Boden (27) der Vertiefung trennt.

2. Formwerkzeug (10) nach Anspruch 1, **dadurch gekennzeichnet, dass** die Flanke (25) eine Winkelöffnung (A) in Bezug auf die Hauptachse (X) zwischen 10° und 30° aufweist.

3. Formwerkzeug (10) nach Anspruch 2, **dadurch gekennzeichnet, dass** die Winkelöffnung der Flanke (25) ungefähr 20° beträgt.

4. Formwerkzeug (10) nach einem der vorhergehenden Ansprüche, **dadurch gekennzeichnet, dass** der Wert des Verhältnisses D1/D2 zwischen dem unteren Durchmesser (D1) des Bodens (27) der Vertiefung und dem oberen Durchmesser (D2) des Scheitelrands (26) der Vertiefung (24) zwischen 65 % und 80 % beträgt.

5. Formwerkzeug (10) nach einem der vorhergehenden Ansprüche, **dadurch gekennzeichnet, dass** in der unteren Position der Reckstange (29) deren distales Ende (31) in einem Abstand (E1) von der Flanke (25) der zentralen Vertiefung (24) von ungefähr 2,5 mm ist.

6. Formwerkzeug (10) nach einem der vorhergehenden Ansprüche, **dadurch gekennzeichnet, dass** die Wand (16) des Formwerkzeugblocks (15) um die Hauptachse (X) herum rotationsasymmetrisch ist.

7. Formwerkzeug (10) nach einem der vorhergehenden Ansprüche, **dadurch gekennzeichnet, dass** es mindestens einen Einsatz (17) umfasst, der in Bezug auf den Formwerkzeugblock (15) quer beweglich ist zwischen einer zurückgezogenen Position, in welcher der Einsatz (17) von der Wand (16) zurückversetzt ist, und einer entfalteten Position, in welcher der Einsatz (17) von der Wand (16) vorspringt, um eine hohle Aussparung (6) in dem Körper (2) des Behälters (1) zu bilden.

8. Formwerkzeug (10) nach einem der vorhergehenden Ansprüche, **dadurch gekennzeichnet, dass** das distale Ende (31) der Reckstange (29) halbkugelförmig ist und einen Radius (R) aufweist, dessen Wert geringer als der (D2/2) des oberen Radius der zentralen Vertiefung (24) ist.

9. Formwerkzeug (10) nach einem der Ansprüche 1 bis 8, **dadurch gekennzeichnet, dass** das distale Ende (31) der Reckstange (29) flach ist und einen Durchmesser (D3) mit geringerem Wert als dem des unteren Durchmessers (D1) aufweist.

10. Formwerkzeug (10) nach Anspruch 9, **dadurch gekennzeichnet, dass** die Stange (29) in der Nähe ihres Endes (31) eine Verjüngung (B) aufweist.

11. Formwerkzeug nach Anspruch 2 in Verbindung mit Anspruch 10, **dadurch gekennzeichnet, dass** die Verjüngung (B) der Stange (29) geringer als die Winkelöffnung (A) der Flanke (25) ist.

12. Verfahren zur Herstellung eines Behälters (1) in einem Formwerkzeug (10) nach einem der vorhergehenden Ansprüche aus einem Vorformling (11) aus Kunststoff, das die folgenden Arbeitsschritte umfasst:

    - Einführen des zuvor auf eine Temperatur über der Glasübergangstemperatur seines Werkstoffs erhitzten Vorformlings (11) in das Formwerkzeug (10);
    - Einspritzen eines unter Druck stehenden Fluids in den Vorformling (11);
    - Verlagern der Reckstange (29) aus ihrer oberen Position in ihre untere Position, so dass ein Einklemmen durch Scherung des Materials zwischen dem distalen Ende (31) der Stange (29) und der Kegelstumpfflanke (24) gewährleistet ist.

**Claims**

1. Mold (10) for the forming by stretch blow-molding of a container (1) from a plastic blank (11), this container (1) comprising a body (2), which extends along a main axis (X) and is closed by a bottom (4) defining an annular base (5) that extends in a resting plane (P) substantially perpendicular to the main axis (X), the bottom (4) having, starting from the base (5) and in the direction of the main axis (X), a concave arch (7) pointing towards the inside of the container (1), a central bulb (8) that protrudes from the arch (7) towards the inside of the container (1), and a slug (9) that protrudes at the vertex of the bulb (8) towards the outside of the container (1), this mold (10) comprising:

    - a mold block (15), an inner wall (16) of which defines an at least partial shape of the body (2) of the container (1), the inner wall (16) extending along a main axis (X) corresponding to the main axis (X) of the container (1);
    - a mold base (19) having an upper molding face (20) that defines an at least partial shape of the bottom (4) of the container (1), the mold base (19) having:

        ◦ a peripheral face (21) that complements the arch (7) and extends sloping from near the main axis (X) to an annular groove (22) that complements the base (5),
        ◦ a central dome (23) that complements the bulb (8) and protrudes from the peripheral face (21) towards the inside of the mold (10), and
        ◦ a central well (24) that complements the slug (9), formed in the dome (23) and extending along a truncated conical side wall (25) from a top edge (26) of the dome (23) having a top diameter (D2), i.e. a top radius with a value D2/2, to a bottom (27) having a bottom diameter (D1), i.e. a bottom radius with a value D1/2, and the value of the bottom diameter (D1) being smaller than the value of the top diameter (D2);

    - a stretching rod (29) that ends in a distal end (31) and is mounted sliding relative to the mold block (15) between a top position in which the distal end (31) is separated from the mold base (19), and a bottom position in which the distal end (31) is near the mold base (19);

    this mold (10) being **characterized in that**, in the bottom position of the rod (29), its distal end (31) is separated from the side wall (25) of the central well (24) by a distance (E1) smaller than a distance (E2) that separates it from the bottom (27) of the well.

2. Mold (10) according to Claim 1, **characterized in that** the side wall (25) has an angular aperture (A), relative to the main axis (X), of between 10° and 30°.

3. Mold (10) according to Claim 2, **characterized in that** the angular aperture of the side wall (25) is approximately 20°.

4. Mold (10) according to one of the previous claims, **characterized in that** the value of the ratio D1/D2 between the bottom diameter (D1) of the bottom (27) of the well and the top diameter (D2) of the top edge **(26)** of the well **(24)** is between 65% and 80%.

5. Mold **(10)** according to one of the previous claims, **characterized in that**, in the bottom position of the stretching rod **(29),** the distal end **(31)** thereof is at a distance **(E1)** from the side wall **(25)** of the central well **(24)** of approximately 2.5 mm.

6. Mold **(10)** according to one of the previous claims, **characterized in that** the wall **(16)** of the mold block **(15)** is rotationally asymmetrical about the main axis **(X)** .

7. Mold **(10)** according to one of the previous claims, **characterized in that** it comprises at least one insert **(17)** that can move transversely relative to the mold block **(15),** between a retracted position in which the insert **(17)** is set back from the wall **(16),** and an extended position in which the insert **(17)** protrudes from the wall **(16)** to form a concave recess **(6)** in the body **(2)** of the container **(1).**

8. Mold **(10)** according to one of the previous claims, **characterized in that** the distal end **(31)** of the stretching rod **(29)** is hemispherical and has a radius **(R)** the value of which is smaller than the value **(D2/2)** of the top radius of the central well **(24).**

9. Mold **(10)** according to one of Claims 1 to 8, **characterized in that** the distal end **(31)** of the stretching rod **(29)** is flat and has a diameter **(D3)** the value of which is smaller than the value of the bottom diameter **(D1).**

10. Mold **(10)** according to Claim 9, **characterized in that** the rod **(29)** has, near its end **(31),** a taper **(B).**

11. Mold according to Claim 2 and Claim 10 taken in combination, **characterized in that** the taper **(B)** of the rod **(29)** is less than the angular aperture **(A)** of the side wall **(25).**

12. Method for manufacturing a container **(1)** in a mold **(10)** according to one of the previous claims, from a plastic blank **(11),** which comprises the operations consisting of:

     - inserting into the mold **(10)** the blank **(11),** previously heated to a temperature greater than the glass transition temperature of its constituent material;
     - injecting a pressurized fluid into the blank **(11);**
     - moving the stretching rod **(29)** from its top position to its bottom position in order to ensure the shear clamping of the material between the distal end **(31)** of the rod **(29)** and the truncated conical side wall **(24)** .

FIG1

FIG.2

FIG.3

FIG.4

FIG.5

FIG.6A

FIG.6B

FIG.7A

FIG.7B

**EP 3 678 836 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6277321 B, Schmallbach
- US 2015375442 A1
- US 2012037645 A1